# EUROPÄISCHE PATENTSCHRIFT

(11) **EP 2 353 976 B1**
(45) Veröffentlichungstag und Bekanntmachung des Hinweises auf die Patenterteilung: **27.04.2016**
(21) Anmeldenummer: 11000184.9
(22) Anmeldetag: 12.01.2011
(51) Int. Cl.: B62D 55/112, B62D 55/14, B66C 23/90

(54) **Raupenfahrwerk und Raupenkran**
Track assembly and crawler crane
Chenille et grue chenillée

(30) Priorität: 20.01.2010 DE 202010001192 U
(43) Veröffentlichungstag der Anmeldung: 10.08.2011
(73) Patentinhaber: Liebherr-Werk Ehingen GmbH, 89584 Ehingen/Donau (DE)
(72) Erfinder: Willim, Hans-Dieter, Dipl.-Ing., 89079 Ulm-Unterweiler (DE)
(74) Vertreter: Laufhütte, Dieter

(56) Entgegenhaltungen:
- DE-A1- 1 943 575
- DE-A1- 3 711 239
- DE-A1- 19 620 759
- DE-A1-102004 059 823
- DE-U1-202007 017 896
- JP-A- 6 115 465

## Beschreibung

Die vorliegende Erfindung betrifft ein Raupenfahrwerk, insbesondere ein Raupenfahrwerk eines Raupenkrans, mit einem Raupenträger, mit am Raupenträger angeordneten Laufrollen und mit einer Raupenkette. Ferner bezieht sich die vorliegende Erfindung auf einen Raupenkran mit einem entsprechenden Raupenfahrwerk.

Bei einem solchen Raupenfahrwerk liegt üblicherweise die aus Bodenplatten bestehende Kette oben auf Tragrollen und auf der Bodenseite auf Laufrollen auf, während sie über vorne und hinten am Raupenträger angeordnete Antriebs- bzw. Leiträder läuft.

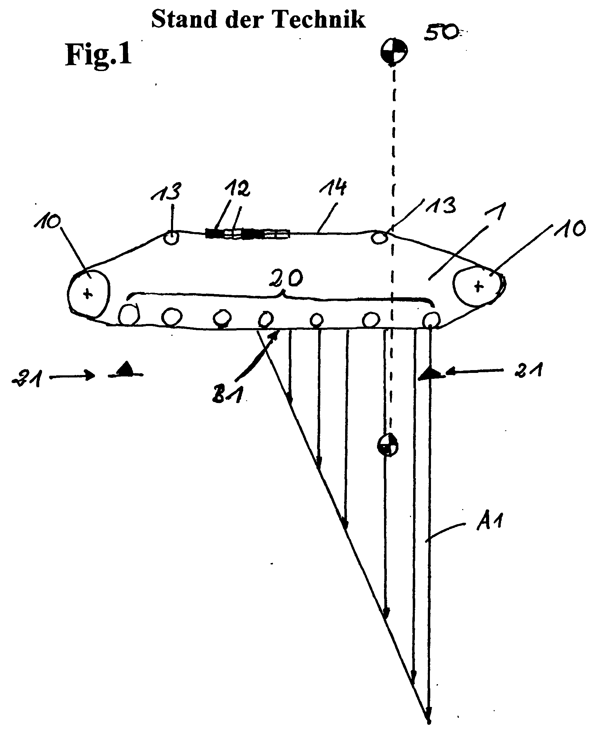

Figur 1 zeigt eine Schnittansicht entlang einer vertikalen Längsebene eines nach dem Stand der Technik bekannten Raupenfahrwerks. Das Raupenfahrwerk weist üblicherweise eine aus Bodenplatten 12 bestehende Kette 14 auf, die oben auf Tragrollen 13 und auf dem Boden auf Laufrollen 20 ausliegt. Die Laufrollen 20 sind in einem Trägerrahmen 1 gehalten. Zum Antrieb des Raupenfahrwerks dienen die beiden Antriebsräder 10. Ausführungen mit einem einzigen Antriebsrad 10 zum Antrieb der Kette 14 sind ebenfalls möglich.

Ein Raupenkran mit entsprechendem Raupenfahrwerk weist vom Unterwagen aus gesehen eine vordere und eine hintere Kippkanten 21 auf, die durch die Lage der vordersten und der hintersten Laufrolle 20 des Raupenfahrwerks definiert sind. Die Lage und Größe des Gesamtschwerpunkts 50 des Raupenkrans wird aus sämtlichen Einzelschwerpunkten zusammengesetzt. Die Laufrollen 20 übertragen über die Bodenplatten 12 der Kette 14 die angreifenden Kräfte auf den Boden. Nur bei einer mittiger Lage des Gesamtschwerpunkts 50 im Bereich zwischen den beiden Kippkanten 21 werden die auftretenden Kräfte gleichmäßig über die gesamte Auflagefläche B1 der Kette 11 an den Boden abgegeben. Eine Verschiebung des Gesamtschwerpunkts 50 in Richtung einer der Kippkanten 21 führt zu einer dreieckförmigen Krafteinleitung/Bodenpressung in Form der Fläche A1 unter der Fläche B1 mit linear ansteigender Kraft/Bodenpressung in Richtung der Kippkante 21. Die Fläche A1 zeigt also ein Diagramm der in Richtung der Kippkante 21 ansteigenden Bodenpressung. Je näher der Gesamtschwerpunkt 50 zur Kippkante 21 wandert, desto größer werden die Kraft bzw. die gefährlichen Kraftspitzen, die die vorderste Laufrolle 20 an den Boden überträgt. Da die Tragfähigkeit des Bodens auf eine maximal mögliche Kraft begrenzt ist, gibt der Boden nach Überschreitung der maximalen Kraft nach und der Schwerpunkt 50 wird weiter in Richtung der Kippkante 21 verschoben, bis der gesamte Kran um die Kippkante 21 kippt.
Da der Boden in der Praxis keine vollkommen ebene Fläche darstellt, ist die tatsächliche Auflagefläche B1 der Kette 14 unbekannt. Die Berechnung des Bodendrucks über die gesamte unbekannte Auflagefläche B1 ist daher nur ungenau bzw. kaum möglich.
Zur Verbesserung der Lenkfähigkeit eines Raupenkrans mit einem derartigen Raupenfahrwerk wurde in der DE 20 2006 001 558 U1, ein Raupenkran vorgeschlagen, bei welchem in der Kurvenfahrt die Auflagefläche der stillstehenden Raupe verringerbar ist. Hierbei wird mittels Gleitkufen bzw. höhenverstellbarer Laufrollen, die im mittigen Bereich des Raupenfahrwerks angeordnet sind, die Auflagefläche auf den mittigen Bereich des Raupenfahrwerks begrenzt.
Eine weitere Umsetzung zur Reduzierung der Auflagefläche der Raupenkette ist aus der DE 20 2007 017 896 U1 bekannt.
Die DE 196 20 759 A1 offenbart ein Fahrwerk für landwirtschaftliche Kettenfahrzeuge, insbesondere für Fahrzeuge mit Ketten aus elastischem Material. Das Fahrwerk umfasst mehrere Laufrollen, die über Schwingen und Stellorgane am Chassis gelagert sind, so dass auch beim Überfahren von Bodenunebenheiten ein gleichmäßiger Druck zwischen Raupe und Untergrund erreicht wird.
Die DE 1 943 575 A betrifft ein Verfahren zur Lenkung von mindestens dreiachsigen Kraftfahrzeugen sowie ein Kraftfahrzeug selbst. Durch Anheben einzelner Radachse soll der Radstand kurzfristig für die Kurvenfahrt verringert werden.
Die JP 6 115465 A beschreibt ein ähnliches Fahrzeug, wobei hier durch Anheben der äußeren Laufrollenpaare die Aufstandsfläche gezielt in die Mitte des Fahrwerks verlagert werden soll.
Ein weiteres Raupenfahrzeug, insbesondere zum Präparieren von Skipisten, ist aus der DE 10 2004 059 823 A1 bekannt. Einzelne Tragräder des Fahrwerks sind über Tragarme relativ zum Rahmen schwenkbar an diesem angeordnet. Ferner ist ei Verstellelement vorgesehen, das eine Verkürzung der Aufstandsfläche zum mittigen Fahrwerksbereich hin erlaubt.
Die vorliegende Erfindung setzt sich zur Aufgabe, ein Raupenfahrwerk für einen Raupenkran aufzuzeigen, dessen Standsicherheit einfach zu überwachen ist und dessen Lenkfähigkeit gleichzeitig optimiert wird.

Erfindungsgemäß wird diese Aufgabe von einem Raupenfahrwerk gemäß Anspruch 1 gelöst.

Ein solches Raupenfahrwerk, insbesondere ein Raupenfahrwerk eines Raupenkrans, weist dabei einen Raupenträger, am Raupenträger angeordnete Laufrollen und eine Raupenkette auf. Erfindungsgemäß ist dabei vorgesehen, dass im vorderen und hinteren Bereich des Raupenträgers jeweils ein Mittel zur Verstellung der Auflagefläche des Raupenträgers vorgesehen ist. Hierdurch können definierte Auflageflächen der Raupenkette hinsichtlich ihrer Größe und Lage geschaffen werden, indem die Lage des bodennahen Kettenbereichs der Raupenkette durch die Mittel im vorderen und hinteren Bereich des Raupenfahrwerks entsprechend angepasst wird.

Zum Einen besteht die Möglichkeit, dass durch die Mittel die Auflagefläche der Raupenkette auf dem Boden reduziert wird, so dass die einzusetzenden Lenkkräfte deutlich geringer werden. Zum Anderen besteht die Möglichkeit, dass die Begrenzung auf zwei gleichgroße Auflageflächen eine gleichmäßige Krafteinleitung in den Boden unter den beiden Auflageflächen zuläßt und sich eine konstante Bodenpressung im Auflagebereich annehmen läßt.

Ausgehend von einer Anfangslage des Raupenfahrwerks mit vollständiger Auflagefläche der Kette lassen sich wahlweise entweder zwei gleichgroße Auflageflächen im vorderen und im hinteren Bereich des Raupenträgers anhand des Mittels einstellen. Die eingangs genannten kritischen Kraftspitzen der Kraftverteilung im Bereich der vorderen und hinteren Laufrollen werden vermieden. Alternativ kann die Auflagefläche der Raupenkette derart verändert werden, dass eine einzige Auflagefläche zur Verkürzung der Aufstandslänge im mittigen Bereich des Raupenträgers entsteht.
Denkbar ist es, dass wenigstens ein Mittel mindestens eine höhenverstellbare Laufrolle umfaßt. Besonders bevorzugt ist im vorderen und im hinteren Bereich mindestens je eine höhenverstellbare Laufrolle angeordnet, die durch Druckaufbau auf die Raupenkette zwei gleichgroße Auflageflächen der Raupenkette im vorderen und hinteren Bereich des Raupenfahrwerks bilden. Alternativ können die höhenverstellbaren Laufrollen unter das Niveau der übrigen Laufrollen angehoben werden. Die resultierende einzige Auflagefläche der Raupenkette wird auf den mittleren Bereich des Raupenfahrwerks reduziert, so dass die Lenkfähigkeit des Raupenkrans durch Verkürzung der Aufstandslänge deutlich verbessert wird.

Erfindungsgemäß ist vorgesehen, dass wenigstens eine höhenverstellbare Laufrolle in einem Kasten gelagert ist, welcher gegenüber dem Raupenträger in Höhenrichtung verschiebbar ist. Hierdurch lassen sich die höhenverschiebbaren Laufrollen gegen die Kette drücken, wobei die Anordnung in einem in Höhenrichtung verschiebbaren Kasten eine ebenso kostengünstige wie stabile Konstruktion ermöglicht.
In weiterhin vorteilhafter Weise ist vorgesehen, dass der Kasten über einen oder mehrere Aktoren, insbesondere über einen oder mehreren Hydraulikzylinder gegenüber dem Raupenträger in Höhenrichtung verstellbar ist, so dass mindestens eine Laufrolle im vorderen und hinteren Bereich des Raupenfahrwerks nach unten gegen die Kette gefahren werden kann. Hierdurch wird die gesamte Auflagefläche wiederum erfindungsgemäß auf die beiden gleichgroßen Auflageflächen im vorderen und hinteren Bereich des Raupenfahrwerks reduziert. Alternativ können die Kästen bzw. die Laufrollen über den mindestens einen Aktor nach oben von der Kette entfernend angehoben werden, so dass sich eine reduzierte Auflagefläche im mittigen Bereich des Raupenfahrwerks bildet.

In einer bevorzugten Ausgestaltung der Erfindung sind mehrere Laufrollen an wenigstens einem Kasten gelagert. Besonders bevorzugt sind jeweils drei Laufrollen innerhalb eines Kastens im vorderen und hinteren Bereich des Raupenfahrwerks gelagert.

Von Vorteil ist es auch, dass mindestens eine Laufrolle in Höhenrichtung unverschiebbar zwischen den Mitteln, insbesondere den höhenverstellbaren Laufrollen, gelagert ist.

In weiterhin vorteilhafter Weise ist wenigstens ein Kraftmeßsystem zur Kraftmessung der im Bereich der Mittel anliegenden Kräfte vorgesehen. Bevorzugte Ausführungen sind durch die Verwendung einer Kraftmeßdose oder einer Meßbrücke zur Kraftmessung gegeben. Selbstverständlich sind beliebige alternative Kraftmeßsysteme anwendbar.

Als besonders vorteilhaft erweist sich die Erfassung der anliegenden Druckkräfte im Bereich der Mittel. Hierdurch lassen sich die auf die beiden gleichgroßen Auflageflächen verteilten Kräfte des Raupenfahrwerks erfassen und einer Steuereinheit zuführen. Derartige Kraftmeßsysteme sind beispielsweise aus der DE 20 2006 017 724 U1 und DE 10 2008 021 627 A1 bekannt, auf die an dieser Stelle ausdrücklich Bezug genommen werden soll. Denkbar ist es auch, dass die auftretenden Kräfte innerhalb der Mittel direkt über eine Meßvorrichtung innerhalb der Mittel erfaßbar sind.

Die vorliegende Erfindung umfasst weiterhin einen Raupenkran mit einem Raupenfahrwerk, wie es oben beschrieben wurde. Offensichtlich weist ein solcher Raupenkran die gleichen Vorteile auf, wie sie oben bezüglich des Raupenfahrwerks dargestellt wurden.

In einer bevorzugten Ausgestaltung des erfindungsgemäßen Raupenkrans sieht der Raupenkran eine Standsicherheitsüberwachung vor, die in Abhängigkeit der gemessenen gleichmäßigen Bodenpressung der beiden gleichgroßen Auflageflächen und/oder der Lage der Kippkanten und/oder der Lage des Gesamtschwerpunkts die Standsicherheit des Raupenkrans überwacht. Erst die Verwendung des erfindungsgemäßen Raupenfahrwerks erlaubt die zuverlässige meßtechnische Erfassung der anliegenden Bodenpressung. Die Standsicherheitsüberwachung ist insbesondere auch während des Montage- und/oder Demontagevorgangs vorteilhaft einsetzbar. Auch hier können zuverlässige Aussagen bezüglich der anliegenden Kräfte bzw. Bodenpressung für eine Vielzahl an Aufrichtezuständen des Krans getroffen werden. Eine Ausrichtung des Krans in horizontaler Ebene wird besonders bevorzugt durch die Standsicherheitsüberwachung unterstützt.

Ferner kann es vorgesehen sein, dass die erfaßten Kräfte im Bereich der Mittel, bevorzugt vier Meßwerte für die jeweils zwei Auflageflächen auf beiden Seiten des Raupenfahrwerks, an eine Steuerung des Raupenkrans weitergeleitet werden. Die Steuerung kann die Kräfte direkt ausgeben und anzeigen und bzw. oder weitere Berechnungen auf Grundlage dieser Werte anstellen. Beispielsweise ist eine Berechnung der anliegenden Bodenpressung durch Multiplikation des jeweilig erfaßten Kraftmeßwertes mit der bekannten Aufstandsfläche denkbar. Ferner ist eine Berechnung der Kippgefahr durch Bestimmung des Abstands zwischen Gesamtschwerpunkt und Kippkante möglich.

Weitere Merkmale, Einzelheiten und Vorteile der Erfindung werden anhand eines in den Zeichnungen dargestellten Ausführungsbeispiels näher erläutert. Es zeigen:
- Figur 1:: eine schematische Seitenansicht des nach dem Stand der Technik bekannten Raupenfahrwerks,
- Figur 2:: eine schematische Seitenansicht des erfindungsgemäßen Raupenfahrwerks,
- Figur 3:: eine vergrößerte Seitenansicht des erfindungsgemäßen Raupenfahrwerks aus Figur 2 und
- Figur 4:: eine Seitenansicht des erfindungsgemäßen Raupenfahrwerks während einer Kurvenfahrt.

Figur 1 zeigt ein nach dem Stand der Technik bekanntes Raupenfahrwerk, wie es bereits ausführlich im einleitenden Teil der Beschreibung erläutert wurde.

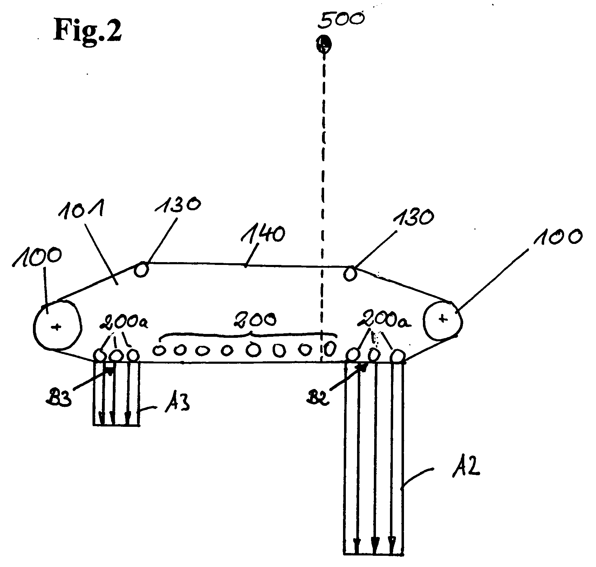

Figur 2 zeigt eine schematische Seitenansicht des erfindungsgemäßen Raupenfahrwerks, das im vorderen und hinteren Bereich des Raupenträgers jeweils ein Mittel zur Verstellung der Auflagefläche des Raupenträgers 101 vorsieht. Das Raupenfahrwerk weist üblicherweise eine aus Bodenplatten bestehende Kette 140 auf, die oben auf Trägerrollen 130 und auf dem Boden auf Laufrollen 200, 200a aufliegt. Die Laufrollen 200, 200a sind in einem Trägerrahmen 101 gehalten. Erfindungsgemäß wird durch die jeweils im vorderen und hinteren Bereich des Raupenträgers 101 angeordneten Mittel die Auflagefläche der Kette 140 auf die beiden gleichgroßen Auflageflächen B2, B3 begrenzt, indem jeweils drei Laufrollen 200a in Richtung der Kette 140 nach unten höhenverstellt werden. Die Summe der beiden einzelnen Auflageflächen B2, B3 ergibt die in Figur 1 dargestellte Auflagefläche B1, falls der Gesamtschwerpunkt 500 eines Raupenkrans bzw. des Raupenfahrwerks bezüglich Betrag und Lage dem Gesamtschwerpunkt 50 der Figur 1 entspricht. Die dargestellten Pfeile der Figur 2 symbolisieren die in den Boden eingeleitete Kraft unterhalb der Auflageflächen B2, B3. Der Figur ist zu entnehmen, dass durch die erfindungsgemäße Einstellung der Auflageflächen B2, B3 eine gleichmäßige Krafteinleitung in den Boden erzielbar ist und folglich eine gleichmäßige Bodenpressung erreicht wird, welche durch die Flächen A2, A3 umschrieben wird. Die Flächen B2, B3 sind selbstverständlich mit Bezug auf ihre Flächengröße stets identisch.

Erfindungsgemäß wird ein Raupenkran bzw. ein Raupenfahrwerk verwirklicht, dessen Standsicherheit einfach zu überwachen ist, da stets gleichmäßige Krafteinleitungen unterhalb der bekannten Auflageflächen B2, B3 vorausgesetzt werden können.

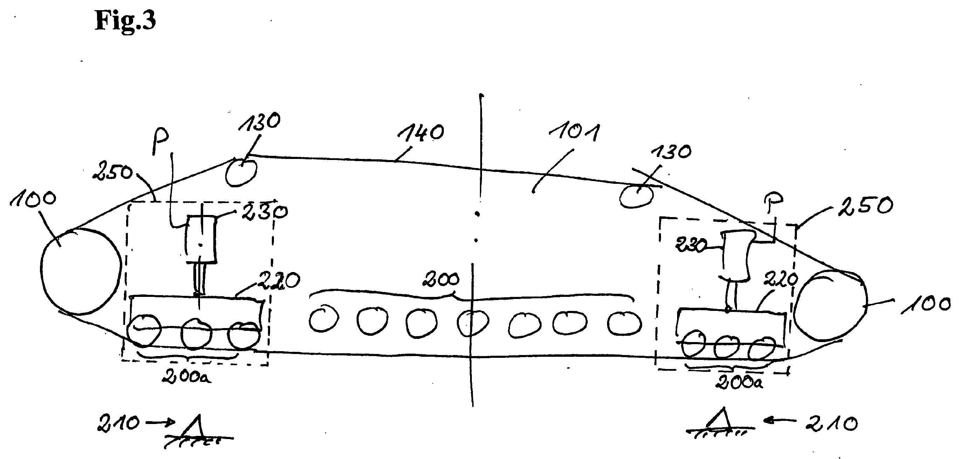

Figur 3 zeigt eine vergrößerte Seitenansicht des erfindungsgemäßen Raupenfahrwerks. Jeweils drei Laufrollen 200a sind im vorderen und hinteren Bereich des Raupenfahrwerks an je einem Kasten 220 gelagert, welche gegenüber dem Raupenträger 101 in Höhenrichtung verschiebbar sind, so dass die Laufrollen 200a nach unten gegen die Kette 140 bewegbar sind. Ferner sind Hydraulikzylinder 230 vorgesehen, über welche die beiden Kästen 220 in Höhenrichtung verschiebbar sind. Die Hydraulikzylinder 230 können hierdurch die Kästen 220 nach unten aus dem Raupenträger 101 herausdrücken, so dass die Laufrollen 200a nach unten gegen die Kette gedrückt werden. Die zwischen den beiden Kästen 220 angeordneten Laufrollen 200 sind demgegenüber unverschiebbar am Raupenträger 101 selbst gelagert.

Im Bereich der Mittel 250, d.h. im Bereich der beiden Hydraulikzylinder 230 ist ein Kraftmeßsystem zur Erfassung der in diesem Teilbereich des Krans auftretenden Kräfte installiert, das die resultierenden Daten an eine Kransteuerung bzw. Überlastsicherung weiterleitet. Die Ermittlung der am Kasten 220 bzw. am Hydraulikzylinder 230 anliegenden Kräfte erfolgt bevorzugt über die Druckmessung der Kolbenzylindereinheit des Hydraulikzylinders 230. Die ermittelten Kräfte an den insgesamt vier Auflageflächen B2, B3 werden an eine Steuerung zur Standsicherheitsüberwachung übermittelt. Hierüber wird der Schwerpunkt 500 des Krans mit Last von der Steuerung bestimmt. Die Kippkanten 210 sind geometrische vorgegeben und der Steuerung bekannt. Ferner lässt sich auf Grundlage der erfaßten Einzelkräften an den Abstützstellen bzw. Auflageflächen B2, B3 die jeweilige anliegende Bodenpressung ausreichend genau ermitteln. Hierdurch wird eine zuverlässige und kontinuierliche Standsicherheitsüberwachung innerhalb der Steuerung realisiert. Insbesondere kann die Standsicherheitsüberwachung auch während des Montage- bzw. Demontagevorgang des Krans sinnvoll eingesetzt werden. Vor allem läßt sich ein erfindungsgemäßer Raupenkran bei der Kranarbeit tatsächlich in einer horizontalen Ebene ausrichten, ohne dass hierzu eine aufwendige und schwere, insbesondere getrennt mit dem Raupenkran zu transportierende und zu de- bzw. montierende zusätzliche Abstützung, erforderlich ist.

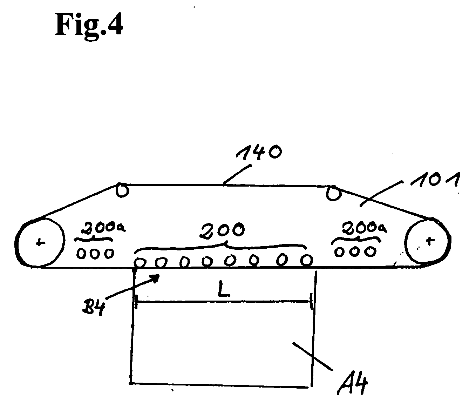

Figur 4 zeigt schließlich eine schematische Seitenansicht des erfindungsgemäßen Raupenfahrwerks während einer Lenkbewegung. Die höhenverstellbaren Kästen 220, insbesondere die höhenverstellbaren Laufrollen 200a, werden entgegen der Raupenkette 140 nach oben verfahren, so dass die Lenkfähigkeit des Raupenkrans bzw. des Raupenfahrwerks durch die Verkürzung der Aufstandslänge L deutlich verbessert wird. Die Auflagefläche B4 des erfindungsgemäßen Raupenfahrwerks reduziert sich demnach auf den mittigen Bereich des Raupenfahrwerks, der von den nicht höhenverstellbaren Lenkrollen 200 getragen wird.

## Patentansprüche

1. Raupenfahrwerk, insbesondere eines Raupenkranes, mit einem Raupenträger (101), am Raupenträger (101) angeordneten Laufrollen (200) und einer Raupenkette (140), wobei im vorderen und hinteren Bereich des Raupenträgers (101) jeweils ein Mittel zum Verstellen der Auflagefläche (B2, B3, B4) des Raupenträgers (101) vorgesehen ist,
**dadurch gekennzeichnet, dass** im vorderen und hinteren Bereich des Raupenträgers (101) je ein Kasten (220) angeordnet ist, in welchem je mindestens eine weitere Laufrolle (200a) gelagert ist, wobei die Kästen (220) gegenüber dem Raupenträger (101) in Höhenrichtung verschiebbar sind, während die zwischen den beiden Kästen (220) angeordneten Laufrollen (200) demgegenüber unverschiebbar am Raupenträger (101) angeordnet sind, so dass die Aufstandslänge (L) veränderbar ist.

2. Raupenfahrwerk nach Anspruch 1, **dadurch gekennzeichnet, dass** zwei gleichgroße Auflageflächen (B2, B3) im vorderen und hinteren Bereich des Raupenträgers (101) zur Verkürzung der Aufstandslänge (L) durch die Höhenverstellung der Kästen (220) einstellbar sind.

3. Raupenfahrwerk nach einem der Ansprüche 1 oder 2, **dadurch gekennzeichnet, dass** die Laufrollen (200), die im mittigen Bereich des Raupenträgers (101) zwischen den höhenverstellbaren Laufrollen (200a) angeordnet sind, in Höhenrichtung unverschiebbar gelagert sind.

4. Raupenfahrwerk nach einem der vorangegangen Ansprüche, **dadurch gekennzeichnet, dass** mehrere Laufrollen (200a), insbesondere je drei Laufrollen (200a), an jedem der Kästen (220) gelagert und höhenverstellbar sind.

5. Raupenfahrwerk nach einem der vorhergehenden Ansprüche, **dadurch gekennzeichnet, dass** die Kästen (220) über einen oder mehrere Aktoren (230), insbesondere einen oder mehrere Hydraulikzylinder, gegenüber dem Raupenträger (101) in Höhenrichtung verstellbar sind.

6. Raupenfahrwerk nach einem der vorangegangenen Ansprüche, **dadurch gekennzeichnet, dass** wenigstens ein Kraftmeßsystem zur Kraftmessung der im Bereich der höhenverstellbaren Laufrollen (200a) anliegenden Kräfte vorgesehen ist, insbesondere eine Kraftmeßdose oder eine Meßbrücke.

7. Raupenkran mit einem Raupenfahrwerk nach einem der vorangegangen Ansprüche.

8. Raupenkran nach Anspruch 7, **dadurch gekennzeichnet, dass** der Raupenkran eine Steuerung zur Standsicherheitsüberwachung aufweist, die in Abhängigkeit der gleichmäßigen Bodenpressung der beiden gleichgroßen Auflageflächen (B2, B3) und/oder der Lage der Kippkanten (210) und/oder der Lage und Größe des Gesamtschwerpunkts (500) die Standsicherheit des Raupenkrans überwacht.

## Claims

1. A crawler travel gear, in particular of a crawler-mounted crane, having a crawler carrier (101), rollers (200) arranged at the crawler carrier (101) and a crawler chain (140), wherein a respective means is provided in the front region and rear region of the crawler carrier (101) for adjusting the contact surface (B2, B3, B4) of the crawler carrier (101),
**characterized in that**
a respective box (220) is arranged in the front and rear regions of the crawler carrier (101) in which at least one respective further roller (200a) is journalled, with the boxes (220) being displaceable in the vertical direction with respect to the crawler carrier (101), while the rollers (200) arranged between the two boxes (220) are in contrast arranged non-displaceably at the crawler carrier (101) so that the contact length (L) can be varied.

2. A crawler travel gear in accordance with claim 1, **characterized in that** two contact surfaces (B2, B3) of equal size can be set in the front and rear region of the crawler carrier (101) for shortening the contact length (L) by the vertical adjustment of the boxes (220).

3. A crawler travel gear in accordance with either of claims 1 or 2, **characterized in that** the rollers (200) arranged in the central region of the crawler carrier (101) between the vertically adjustable rollers (200a) are journalled non-displaceably in the vertical direction.

4. A crawler travel gear in accordance with one of the preceding claims, **characterized in that** a plurality of rollers (200a), in particular a respective three rollers (200a), is journalled at each of the boxes (220) and is displaceable in the vertical direction.

5. A crawler travel gear in accordance with one of the preceding claims, **characterized in that** the boxes (220) are adjustable in the vertical direction with respect to the crawler carrier (101) via one or more actuators (230), in particular via one or more hydraulic cylinders.

6. A crawler travel gear in accordance with one of the preceding claims, **characterized in that** at least one force measuring system is provided for the force measurement of the forces applied in the region of the vertically adjustable rollers (200a), in particular a load cell or a measurement bridge.

7. A crawler-mounted crane having a crawler travel gear in accordance with one of the preceding claims.

8. A crawler-mounted crane in accordance with claim 7, **characterized in that** the crawler-mounted crane has a controller for stability monitoring which monitors the stability of the crawler-mounted crane in dependence on the uniform ground pressure of the two contact surfaces (B2, B3) of equal size and/or on the position of the tilting edges (210) and/or on the position and size of the total center of gravity (500).

## Revendications

1. Chenille, en particulier d'une grue chenillée, comprenant un support de chenille (101), des galets (200) disposés sur le support de chenille (101) et une chenille (140), un moyen étant prévu respectivement dans la zone avant et arrière du support de chenille (101) pour régler la surface d'appui (B2, B3, B4) du support de chenille (101),
**caractérisée en ce qu'**un caisson (220) est disposé respectivement dans la zone avant et arrière du support de chenille (101), dans lequel au moins un autre galet (200a) est respectivement monté, les caissons (220) étant déplaçables dans le sens de la hauteur par rapport au support de chenille (101), tandis que les galets (200) disposés entre les deux caissons (220) sont disposés au contraire non déplaçables sur le support de chenille (101), de telle sorte que la longueur de contact au sol (L) est modifiable.

2. Chenille selon la revendication 1, **caractérisée en ce que** deux surfaces d'appui (B2, B3) de taille égale dans la zone avant et arrière du support de chenille (101) sont réglables pour raccourcir la longueur de contact au sol (L) par le réglage en hauteur des caissons (220).

3. Chenille selon l'une des revendications 1 ou 2, **caractérisée en ce que** les galets (200), qui sont disposés dans la zone centrale du support de chenille (101) entre les galets (200a) réglables en hauteur, sont montés non déplaçables dans le sens de la hauteur.

4. Chenille selon l'une des revendications précédentes, **caractérisée en ce que** plusieurs galets (200a), en particulier respectivement trois galets (200a), sont montés sur chacun des caissons (220) et réglables en hauteur.

5. Chenille selon l'une des revendications précédentes, **caractérisée en ce que** les caissons (220) sont réglables dans le sens de la hauteur par rapport au support de chenille (101) par le biais d'un ou plusieurs actionneurs (230), en particulier un ou plusieurs vérins hydrauliques.

6. Chenille selon l'une des revendications précédentes, **caractérisée en ce qu'**au moins un système de mesure dynamométrique est prévu pour la mesure dynamométrique des forces s'appliquant dans la zone des galets (200a) réglables en hauteur, en particulier une boîte dynamométrique ou un pont de mesure.

7. Grue chenillée comprenant une chenille selon l'une des revendications précédentes.

8. Grue chenillée selon la revendication 7, **caractérisée en ce que** la grue chenillée comporte une commande pour la surveillance de la stabilité, qui surveille la stabilité de la grue chenillée en fonction de la pression sur le sol uniforme des deux surfaces d'appui (B2, B3) de taille égale et/ou de la position des arêtes de basculement (210) et/ou de la position et de la grandeur du centre de gravité global (500).
